# EUROPÄISCHE PATENTSCHRIFT

(11) **EP 4 296 001 B1**
(45) Veröffentlichungstag und Bekanntmachung des Hinweises auf die Patenterteilung: **11.09.2024**
(21) Anmeldenummer: 23179048.6
(22) Anmeldetag: 13.06.2023
(51) Int. Cl.: B25B 5/06, B25B 5/16, B23Q 3/08, B23Q 17/00

(54) **SPANNVORRICHTUNG**
CLAMPING DEVICE
DISPOSITIF DE SERRAGE

(30) Priorität: 21.06.2022 DE 102022115370
(43) Veröffentlichungstag der Anmeldung: 27.12.2023
(73) Patentinhaber: Ludwig Ehrhardt GmbH, 35321 Laubach (DE)
(72) Erfinder: LOTZ, Andreas, 35321 Laubach (DE); THOELEN, Johannes, 40822 Mettmann (DE)
(74) Vertreter: v. Bezold & Partner Patentanwälte - PartG mbB

(56) Entgegenhaltungen:
- EP-A1- 0 313 767
- EP-A1- 2 764 953
- EP-B1- 3 111 164
- FR-A1- 2 482 886

## Beschreibung

### Technisches Gebiet der Erfindung

Die Erfindung betrifft eine Spannvorrichtung mit einer Kolbenstellungsabfrage, insbesondere zum Spannen eines Werkstücks oder eines Werkzeugs, beispielsweise als Schwenkspanner oder als Spannzylinder.

### Hintergrund der Erfindung

Schwenkspanner sind an sich aus dem Stand der Technik bekannt (vgl. EP 2 764 953 A1, welche den Oberbegriff von Anspruch 1 offenbart, oder EP 2 764 953 A1, DE 10 2020 115 803 A1, EP 1264 659 A1) und dienen dazu, ein Werkstück zu spannen, beispielsweise auf einem Maschinentisch. Hierbei ist eine Kolbenstange mit einem Spanneisen schwenkbar und axial verschiebbar, wobei die Bewegung des Spanneisens von einem Antriebskolben angetrieben wird, der axial und druckmittelbetätigt in einem Arbeitszylinder des Schwenkspanners verschiebbar ist. Zwischen dem verschiebbaren Antriebskolben in dem Arbeitszylinder und dem Spanneisen befindet sich hierbei ein Übertragungsgetriebe (z.B. Kulissenmechanik), das die rein axiale Bewegung des Antriebskolbens in eine kombinierte oder aufeinander folgende Schwenk- und Axialbewegung des Spanneisens an der Kolbenstange umwandelt.

Aus EP 2 764 953 A1 ist weiterhin eine pneumatische Stellungsabfrage bekannt, um die Stellung der Kolbenstange pneumatisch abfragen zu können. Hierzu befinden sich in dem Schwenkspanner Pneumatikventile, die mechanisch von der Kolbenstange bzw. von dem Kolben in dem Antriebszylinder betätigt werden.

Ein Nachteil dieser bekannten pneumatischen Stellungsabfrage besteht darin, dass in dem Schwenkspanner Bauraum für die Pneumatikventile benötigt wird, was insbesondere die axiale Baulänge des Schwenkspanners vergrößert.

Ein weiterer Nachteil dieser bekannten pneumatischen Stellungsabfrage besteht darin, dass die Stellungsabfrage relativ aufwendig sind und bewegte Teile enthält, so dass eine Vereinfachung wünschenswert ist.

Zum allgemeinen technischen Hintergrund der Erfindung ist auch hinzuweisen auf US 2013/0230389 A1, FR 2 482 886 A1, EP 0 313 767 A1 und EP 3 111 164 B1.

Der Erfindung liegt deshalb die Aufgabe zugrunde, eine entsprechend verbesserte Spannvorrichtung zu schaffen.

### Beschreibung der Erfindung

Diese Aufgabe wird durch eine erfindungsgemäße Spannvorrichtung gemäß dem Hauptanspruch gelöst.

Hierbei ist allgemein zu erwähnen, dass die Erfindung nicht beschränkt ist auf eine Spannvorrichtung, die zum Spannen eines Werkstücks dient. Alternativ besteht auch die Möglichkeit, dass die Spannvorrichtung zum Spannen eines Werkzeugs dient, wie beispielsweise eines Pressenwerkzeugs oder eines Spritzgussformwerkzeugs.

Die erfindungsgemäße Spannvorrichtung ist vorzugsweise als Schwenkspanner ausgebildet, wie es vorstehend beschrieben wurde. Derartige Schwenkspanner weisen eine Kolbenstange auf, die sowohl axial verschiebbar als auch schwenkbar (drehbar) ist. Es besteht jedoch im Rahmen der Erfindung auch die Möglichkeit, dass die Kolbenstange der Spannvorrichtung nur axial verschiebbar ist, wohingegen eine Drehung (Schwenkung) der Kolbenstange nicht möglich ist. Grundsätzlich eignet sich das erfindungsgemäße Prinzip sogar für Spannvorrichtungen, bei denen die Kolbenstange nur drehbar ist, wohingegen eine Axialverschiebung ausgeschlossen ist.

Die erfindungsgemäße Spannvorrichtung weist zunächst in Übereinstimmung mit dem Stand der Technik einen Führungszylinder mit einer Kolbenstangenlauffläche auf, wobei in dem Führungszylinder eine Kolbenstange beweglich geführt ist. Die Kolbenstange kann hierbei - wie vorstehend erwähnt - axial verschiebbar und/oder drehbar sein.

Darüber hinaus weist die erfindungsgemäße Spannvorrichtung in Übereinstimmung mit dem Stand der Technik eine pneumatische Stellungsabfrage auf, um die Stellung der Kolbenstange abfragen zu können. Die pneumatische Stellungsabfrage weist hierzu einen Zuluftkanal zur Zuführung von Druckluft und einen Abluftkanal zur Abführung der Druckluft auf. Darüber hinaus umfasst die pneumatische Stellungsabfrage ein erstes Steuerelement, das in Abhängigkeit von der Stellung der Kolbenstange eine Strömungsverbindung von dem ersten Zuluftkanal in den Abluftkanal freigibt oder versperrt. Die Sperrung bzw. Freigabe der Strömungsverbindung von dem Zuluftkanal in den Abluftkanal kann dann pneumatisch detektiert werden, beispielsweise durch einen Drucksensor oder durch einen Strömungssensor, was eine Erkennung der Stellung der Kolbenstange ermöglicht.

Bei der eingangs beschriebenen bekannten pneumatischen Stellungsabfrage gemäß EP 2 764 953 A1 handelt es sich bei dem ersten Steuerelement um ein Pneumatikventil, wie eingangs beschrieben wurde. Die Erfindung sieht dagegen eine andere Konstruktion und Funktionsweise der pneumatischen Stellungsabfrage vor. So mündet der erste Zuluftkanal der pneumatischen Stellungsabfrage in einer Mündungsöffnung in der Kolbenstangenlauffläche des Führungszylinders aus. Der Abluftkanal mündet in gleicher Weise in einer Mündungsöffnung in der Kolbenstangenlauffläche des Führungszylinders aus. Bei der erfindungsgemäßen pneumatischen Stellungsabfrage ist das erste Steuerelement in der Mantelfläche der Kolbenstange angeordnet, wobei das erste Steuerelement in Abhängigkeit von der Stellung der Kolbenstange die Strömungsverbindung zwischen der Mündungsöffnung des ersten Zuluftkanals und der Mündungsöffnung des Abluftkanals in der Kolbenstangenlauffläche des Führungszylinders freigibt oder versperrt.

In einem bevorzugten Ausführungsbeispiel der Erfindung handelt es sich bei dem ersten Steuerelement der pneumatischen Stellungsabfrage um eine erste Ringnut oder eine erste Teilringnut in der Mantelfläche der Kolbenstange, wobei die Kolbenstange axial beweglich geführt ist. Die erste Ringnut bzw. Teilringnut in der Mantelfläche der Kolbenstange gibt dann die Strömungsverbindung zwischen der Mündungsöffnung des ersten Zuluftkanals und der Mündungsöffnung des Abluftkanals in der Kolbenstangenlauffläche des Führungszylinders frei oder versperrt diese Strömungsverbindung.

Falls die Kolbenstange axial so steht, dass die Mündungsöffnung des ersten Zulaufkanals und die Mündungsöffnung des Abluftkanals im Bereich der ersten Ringnut bzw. Teilringnut liegen, so kann Druckluft aus dem Zuluftkanal durch die Ringnut in den Abluftkanal strömen.

Falls die Kolbenstange dagegen so steht, dass die erste Ringnut bzw. Teilringnut in der Mantelfläche der Kolbenstange axial versetzt ist zu mindestens einer der Mündungsöffnungen in des Zuluftkanals oder des Abluftkanals, so wird die Strömungsverbindung aus dem Zuluftkanal in den Abluftkanal von der Mantelfläche der Kolbenstange versperrt.

Die vorstehend beschriebene erfindungsgemäße pneumatische Stellungsabfrage ermöglicht also eine Bestimmung der axialen Stellung der Kolbenstange.

Darüber hinaus kann die erfindungsgemäße Stellungsabfrage jedoch auch die Drehstellung der Kolbenstange ermitteln, wie nachfolgend beschrieben wird. Hierzu weist die erfindungsgemäße pneumatische Stellungsabfrage einen zweiten Zuluftkanal zur Zuführung von Druckluft auf, wobei der zweite Zuluftkanal ebenfalls in einer Mündungsöffnung in der Kolbenstangenlauffläche des Führungszylinders ausmündet. In der Mantelfläche der Kolbenstange befindet sich hierbei ein zweites Steuerelement, das in Abhängigkeit von der Stellung der Kolbenstange die Strömungsverbindung zwischen der Mündungsöffnung des zweiten Zuluftkanals und der Mündungsöffnung des Abluftkanals in der Kolbenstangenlauffläche des Führungszylinders freigibt oder versperrt. Das zweite Steuerelement besteht hierbei aus einer axial verlaufenden Ausnehmung (z.B. Langloch) in der Mantelfläche der Kolbenstange, wobei sich die Ausnehmung in axialer Richtung erstreckt und auch als Langloch bezeichnet werden kann. Bei dem bevorzugten Ausführungsbeispiel der Erfindung erstreckt sich diese Ausnehmung jedoch nicht über den gesamten Umfang der Kolbenstange, sondern nur über einen relativ kleinen Winkelbereich des Umfangs der Kolbenstange. In Abhängigkeit von der Drehstellung der Kolbenstange gibt die Ausnehmung dann die Strömungsverbindung aus dem Zuluftkanal in den Abluftkanal frei oder sperrt diese Strömungsverbindung. Hierbei ist zu erwähnen, dass die Mündungsöffnung des zweiten Zuluftkanals und die Mündungsöffnung des Abluftkanals in der Kolbenstangenlauffläche des Führungszylinders vorzugsweise in derselben Winkelstellung angeordnet sind.

Falls die Kolbenstange so gedreht ist, dass sich die Ausnehmung (z.B. Langloch) in der Mantelfläche der Kolbenstange in derselben Winkelstellung befindet, wie die Mündungsöffnung des zweiten Zuluftkanal einerseits und die Mündungsöffnung des Abluftkanals andererseits, so wird die Strömungsverbindung aus dem zweiten Zuluftkanal durch die Ausnehmung in den Abluftkanal freigegeben. Dies gilt allerdings nur dann, wenn die Kolbenstange auch gleichzeitig in axialer Richtung so positioniert ist, dass die Ausnehmung (z.B. Langloch) die beiden Mündungsöffnungen des zweiten Zuluftkanal einerseits und des Abluftkanals andererseits in axialer Richtung überdeckt.

Falls die Kolbenstange dagegen so gedreht ist, dass sich die Ausnehmung in der Mantelfläche der Kolbenstange in einer anderen Winkelstellung befindet als die Mündungsöffnung des zweiten Zuluftkanals und des Abluftkanals, so kann keine Druckluft aus dem zweiten Zuluftkanal durch die Ausnehmung in der Mantelfläche der Kolbenstange in den Abluftkanal strömen.

Vorstehend wurde beschrieben, wie die pneumatische Stellungsabfrage eine Bestimmung der Axialstellung und der Drehstellung der Kolbenstange ermöglicht.

In einem bevorzugten Ausführungsbeispiel der Erfindung befindet sich in der Mantelfläche der Kolbenstange auch ein drittes Steuerelement, das in Abhängigkeit von der Axialstellung der Kolbenstange die Strömungsverbindung zwischen der Mündungsöffnung des ersten Zuluftkanals und der Mündungsöffnung des Abluftkanals in der Kolbenstangenlauffläche des Führungszylinders freigibt oder versperrt. Dieses dritte Steuerelement ist vorzugsweise axial beabstandet zu dem ersten Steuerelement in der Mantelfläche der Kolbenstange.

Bei diesem dritten Steuerelement kann es sich beispielsweise um eine zweite Ringnut oder eine zweite Teilringnut am Umfang der Mantelfläche der Kolbenstange handeln, wobei die zweite Ringnut bzw. Teilringnut in Abhängigkeit von der Axialstellung der Kolbenstange die Strömungsverbindung zwischen der Mündungsöffnung des ersten Zuluftkanal und der Mündungsöffnung des Abluftkanals in der Kolbenstangenlauffläche des Führungszylinders freigibt oder versperrt. Hierbei sind also in der Mantelfläche der Kolbenstange zwei Ringnuten angeordnet, die axial beabstandet sind. Die zweite Ringnut ermöglicht dann eine Detektion eines durchgespannten Zustands der Spannvorrichtung, wie später noch detailliert erläutert wird.

Ferner ist zu erwähnen, dass die Mündungsöffnung des ersten Zuluftkanals in der Kolbenstangenlauffläche des Führungszylinders vorzugsweise axial versetzt ist zu der Mündungsöffnung des zweiten Zuluftkanals in der Kolbenstangenlauffläche des Führungszylinders.

Weiterhin ist zu erwähnen, dass die Mündungsöffnung des ersten Zuluftkanals in der Kolbenstangenlauffläche des Führungszylinders vorzugsweise axial versetzt ist zu der Mündungsöffnung des Abluftkanals in der Kolbenstangenlauffläche des Führungszylinders.

Weiterhin ist auch die Mündungsöffnung des zweiten Zuluftkanals in der Kolbenstangenlauffläche des Führungszylinders vorzugsweise axial versetzt zu der Mündungsöffnung des Abluftkanals in der Kolbenstangenlauffläche des Führungszylinders.

Ferner ist zu erwähnen, dass die Mündungsöffnung des ersten Zuluftkanals einerseits und die Mündungsöffnung des zweiten Zuluftkanals andererseits vorzugsweise in Umfangsrichtung versetzt angeordnet sind, beispielsweise auf gegenüberliegenden Seiten der Kolbenstangenlauffläche des Führungszylinders.

Darüber hinaus ist vorzugsweise auch die Mündungsöffnung des ersten Zuluftkanals in Umfangsrichtung versetzt angeordnet zu der Mündungsöffnung des Abluftkanals in der Kolbenstangenlauffläche. Beispielsweise können die Mündungsöffnung des ersten Zuluftkanals einerseits und die Mündungsöffnung des Abluftkanals andererseits in der Kolbenstangenlauffläche einander gegenüberliegend angeordnet sein.

Die Mündungsöffnungen des ersten Zuluftkanals einerseits und des Abluftkanals andererseits sind dagegen in der Kolbenstangenlauffläche vorzugsweise in derselben Winkelstellung angeordnet, wie vorstehend bereits kurz erwähnt wurde.

Ferner ist zu erwähnen, dass sich die Ausnehmung (z.B. Langloch) in der Mantelfläche der Kolbenstange in axialer Richtung vorzugsweise bis in die erste Ringnut bzw. Teilringnut in der Mantelfläche der Kolbenstange erstreckt.

Darüber hinaus kann sich die Ausnehmung (z.B. Langloch) in der Mantelfläche der Kolbenstange in axialer Richtung bis in die zweite Ringnut bzw. Teilringnut in der Mantelfläche der Kolbenstange erstrecken.

Der mechanische Antrieb der erfindungsgemäßen Spannvorrichtung erfolgt vorzugsweise durch einen Druckmittelantrieb, d.h. pneumatisch oder hydraulisch. Hierzu weist der Druckmittelantrieb einen Arbeitszylinder auf, in dem ein Antriebskolben axial verschiebbar ist, wobei der Antriebskolben mechanisch mit der Kolbenstange der Spannvorrichtung verbunden ist und die Kolbenstange mechanisch in axialer Richtung antreibt. Bei dem bevorzugten Ausführungsbeispiel der Erfindung wird der Antriebskolben hydraulisch angetrieben, d.h. mittels Hydraulik. Es ist jedoch grundsätzlich auch möglich, dass der Druckmittelantrieb pneumatisch arbeitet.

Es wurde eingangs bereits erwähnt, dass es sich bei der erfindungsgemäßen Spannvorrichtung um einen Schwenkspanner handeln kann, so dass am oberen Ende der Kolbenstange ein Spanneisen montiert werden kann. Der Führungszylinder mit der pneumatischen Stellungsabfrage kann sich hierbei zwischen dem oberen Ende der Kolbenstange einerseits und dem Arbeitszylinder befinden, d.h. im oberen Bereich des Schwenkspanners. Es besteht jedoch alternativ auch die Möglichkeit, dass sich die pneumatische Stellungsabfrage im unteren Bereich des Schwenkspanners befindet. Hierzu kann eine zweite Kolbenstange von dem Antriebskolben nach unten abstehen und die Strömungsverbindungen zwischen den Zuluftkanälen und dem Abluftkanal steuern.

Weiterhin ist zu erwähnen, dass der erfindungsgemäße Schwenkspanner vorzugsweise eine Kulissenführung aufweist, die eine axiale Antriebsbewegung des Antriebskolbens in eine kombinierte oder aufeinander folgende Axial- und Drehbewegung der Kolbenstange umwandelt. Derartige Kulissenführungen sind von Schwenkspannern aus dem Stand der Technik bekannt und müssen deshalb nicht näher beschrieben werden.

Die erfindungsgemäße pneumatische Stellungsabfrage ermöglicht vorzugsweise eine Unterscheidung von mindestens zwei der folgenden Stellungen des Schwenkspanners:
- Eine erste Stellung, in der der Schwenkspanner nicht geschwenkt und entspannt ist.
- Eine zweite Stellung, in der der Schwenkspanner vor einem Spannhub zunächst einen Schwenkhub oder eine Schwenkbewegung ausführt.
- Eine dritte Stellung, in der der Schwenkspanner nach dem Schwenkhub oder der Schwenkbewegung einen Spannhub ausführt.
- Eine vierte Stellung, in der der Schwenkspanner nach dem Spannhub durchgespannt ist.

In dem bevorzugten Ausführungsbeispiel der Erfindung kann die pneumatische Stellungsabfrage alle vorstehend genannten vier verschiedenen Stellungen des Schwenkspanners unterscheiden.

Dabei wird die Strömungsverbindung zwischen den Zuluftkanälen und dem Abluftkanal in den verschiedenen Stellungen vorzugsweise wie folgt gesteuert:
- Erste Stellung: Die Strömungsverbindung aus dem ersten Zuluftkanal in den Abluftkanal wird freigegeben, während die Strömungsverbindung aus dem zweiten Zuluftkanal in den Abluftkanal gesperrt wird.
- Zweite Stellung: Die Strömungsverbindung aus dem ersten Zuluftkanal in den Abluftkanal wird freigegeben, wie auch die Strömungsverbindung aus dem zweiten Zuluftkanal in den Abluftkanal freigegeben wird.
- Dritte Stellung: Die Strömungsverbindung aus dem ersten Zuluftkanal in den Abluftkanal wird gesperrt, während die Strömungsverbindung aus dem zweiten Zuluftkanal in den Abluftkanal freigegeben wird.
- Vierte Stellung: Die Strömungsverbindung aus dem ersten Zuluftkanal in den Abluftkanal wird freigegeben, wie auch die Strömungsverbindung aus dem zweiten Zuluftkanal in den Abluftkanal freigegeben wird. Alternativ besteht die Möglichkeit, dass in der vierten Stellung die Strömungsverbindung aus dem ersten Zuluftkanal in den Abluftkanal gesperrt wird, wie auch die Strömungsverbindung aus dem zweiten Zuluftkanal in den Abluftkanal gesperrt wird.

Weiterhin ist zu erwähnen, dass sich der Antriebskolben in der ersten Stellung des Schwenkspanners in dem Arbeitszylinder vorzugsweise an seinem oberen Anschlag befindet. In der zweiten Stellung und/oder in der dritten Stellung des Schwenkspanners befindet sich der Antriebskolben dagegen vorzugsweise zwischen seinem oberen Anschlag und seinem unteren Anschlag. In der vierten Stellung des Schwenkspanners befindet sich der Antriebskolben dagegen vorzugsweise an seinem unteren Anschlag.

Es wurde eingangs bereits erwähnt, dass die pneumatische Stellungsabfrage gemäß der Erfindung sowohl die axiale Stellung der Kolbenstange als auch die Drehstellung der Kolbenstange erfassen kann.

Weiterhin ist als Vorteil zu erwähnen, dass die erfindungsgemäße pneumatische Stellungsabfrage zusätzlich zu der Kolbenstange keine beweglichen Teile in dem Schwenkspanner aufweist und deshalb eine geringe Fehleranfälligkeit und einen einfachen Aufbau aufweist. So benötigt die herkömmliche pneumatische Stellungsabfrage gemäß EP 2 764 953 A1 zusätzlich ein Pneumatikventil mit mehreren beweglichen Teilen, was wesentlich aufwändiger und fehleranfälliger ist.

Ferner ist zu erwähnen, dass die Kolbenstange mit den Steuerelementen (z.B. Ringnut) nicht notwendigerweise einstückig sein muss. So besteht beispielsweise auch die Möglichkeit, dass die Kolbenstange aus einem Grundkörper und einer Hülse besteht, die den Grundkörper umgibt, wobei die Steuerelemente (z.B. Ringnut) dann in der Hülse angeordnet sind. Somit hat man eine Kolbenstange als Grundkörper, auf den bei Bedarf verschiedene Hülsen aufgesetzt werden können. Die Hülse ist hierbei fest mit dem Grundkörper verbunden, wobei diese Verbindung beispielsweise durch Einpressen, Aufschrumpfen oder Kleben erfolgen kann.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert.

### Kurzbeschreibung der Zeichnungen

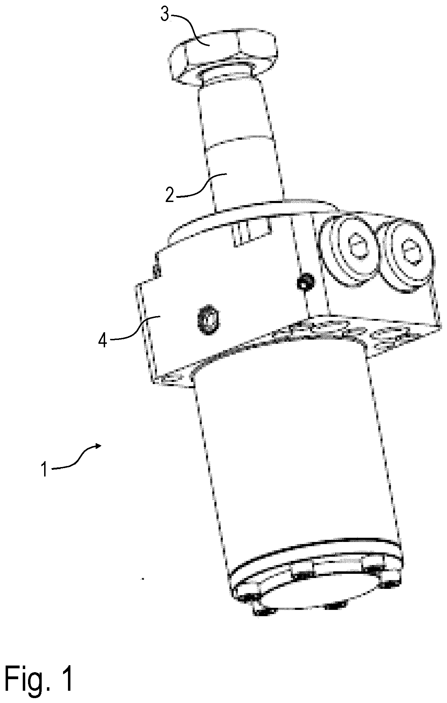

Figur 1 zeigt eine Perspektivansicht eines erfindungsgemäßen Schwenkspanners.
Figur 2 zeigt eine Schnittansicht des erfindungsgemäßen Schwenkspanners in einer ersten Stellung, in der der Schwenkspanner entspannt und nicht geschwenkt ist.
Figur 3 zeigt eine Querschnittsansicht des Schwenkspanners in einer zweiten Stellung, in der der Schwenkspanner schwenkt.
Figur 4 zeigt eine Querschnittsansicht des erfindungsgemäßen Schwenkspanners in einer dritten Stellung, in der der Schwenkspanner geschwenkt ist und einen Spannhub ausführt.
Figur 5 zeigt eine Querschnittsansicht des erfindungsgemäßen Schwenkspanners in einer Stellung ähnlich zu Figur 4 in einem fortgeschrittenen Zustand des Spannhubs.
Figur 6 zeigt schließlich einen vierten Zustand des erfindungsgemäßen Schwenkspanners im durchgespannten Zustand.
Figur 7 zeigt ein Zustandsdiagramm der erfindungsgemäßen dramatischen Stellung ab Frage für die verschiedenen Stellungen des Schwenkspanners.
Figur 8 zeigt eine Abwandlung von Figur 7.
Figur 9 zeigt eine weitere Abwandlung von Figur 7.

### Detaillierte Beschreibung der Zeichnungen

Die Zeichnungen zeigen einen erfindungsgemäßen Schwenkspanner 1 zum Spannen von Werkstücken, beispielsweise auf einem Maschinentisch.

Hierzu weist der erfindungsgemäße Schwenkspanner 1 eine Kolbenstange 2 auf, die axial verschiebbar und drehbar ist und an ihrem oberen Ende eine Möglichkeit zur Aufnahme eines Spanneisens trägt, wie es an sich von herkömmlichen Schwenkspanner bekannt ist. In der Zeichnung ist hierbei eine Befestigungsmutter 3 zur Befestigung des Spanneisens dargestellt.

Die Kolbenstange 2 ist in einem Gehäuse 4 des Schwenkspanners 1 axial verschiebbar und drehbar gelagert. Hierzu weist das Gehäuse 4 des Schwenkspanners 1 einen Führungszylinder mit einer Kolbenstangenlauffläche 5 auf.

Der mechanische Antrieb des Schwenkspanners 1 erfolgt durch einen hydraulischen oder pneumatischen Druckmittelantrieb. Hierzu weist der Schwenkspanner 1 einen Antriebskolben 6 auf, der in einem Arbeitszylinder 7 verschiebbar ist, und hydraulisch oder pneumatisch angetrieben wird, wie an sich aus dem Stand der Technik bekannt ist.

Darüber hinaus weist auch der erfindungsgemäße Schwenkspanner 1 eine Kulissenführung 8 auf, die die rein axiale Antriebsbewegung des Kolbens 6 in eine kombinierte oder aufeinander folgende Axial- und Drehbewegung der Kolbenstange 2 umwandelt.

Zur Ermittlung der axialen Stellung und der Drehstellung der Kolbenstange 2 weist der erfindungsgemäße Schwenkspanner 1 eine pneumatische Stellungsabfrage auf, die nachfolgend beschrieben wird.

Zunächst umfasst die pneumatische Stellungsabfrage einen ersten Zuluftkanal 9, der in einer Mündungsöffnung 10 in der Kolbenstangenlauffläche 5 des Führungszylinders ausmündet.

Darüber hinaus umfasst die pneumatische Stellungsabfrage einen Abluftkanal 11 auf, der in einer Mündungsöffnung 12 in der Kolbenstangenlauffläche 5 ausmündet.

Weiterhin umfasst die erfindungsgemäße pneumatische Stellungsabfrage einen zweiten Zuluftkanal 13, der in einer Mündungsöffnung 14 in der Kolbenstangenlauffläche 5 des Führungszylinders ausmündet.

Die Mündungsöffnungen 10 und 12 des ersten Zuluftkanals 9 bzw. des Abluftkanals 11 sind hierbei in der Kolbenstangenlauffläche 5 des Führungszylinders einander gegenüberliegend und in derselben Axialstellung angeordnet. Diese gegenüberliegende Anordnung ist jedoch technisch nicht zwingend erforderlich.

Die Mündungsöffnungen 12, 14 des zweiten Zuluftkanals 13 bzw. des Abluftkanals 11 sind dagegen in der Kolbenstangenlauffläche 5 in derselben Winkelstellung angeordnet, aber axial versetzt zueinander. Diese axial versetzte Anordnung ist jedoch technisch nicht zwingend erforderlich.

Darüber hinaus umfasst die erfindungsgemäße pneumatische Stellungsabfrage eine Ringnut 15 in der Mantelfläche der Kolbenstange 2, eine weitere Ringnut 16 in der Mantelfläche der Kolbenstange 2 und eine axial verlaufende Ausnehmung 17 (Langloch) in der Mantelfläche der Kolbenstange 2. Die beiden Ringnuten 15, 16 und die Ausnehmung 17 steuern die Strömungsverbindung aus den beiden Zuluftkanälen 9, 13 in den Abluftkanal 11 in Abhängigkeit von der Axialstellung und der Drehstellung der Kolbenstange 2, wie nachfolgend beschrieben wird. Zu den Zeichnungen ist allgemein zu erwähnen, dass freigegebene Strömungsverbindungen durch gestrichelte Pfeile dargestellt sind.

Hierbei ist zu erwähnen, dass über den ersten Zuluftkanal 11 eine erste Druckluft M1 zugeführt werden kann, während über den zweiten Zuluftkanal 13 eine zweite Druckluft M2 zugeführt werden kann.

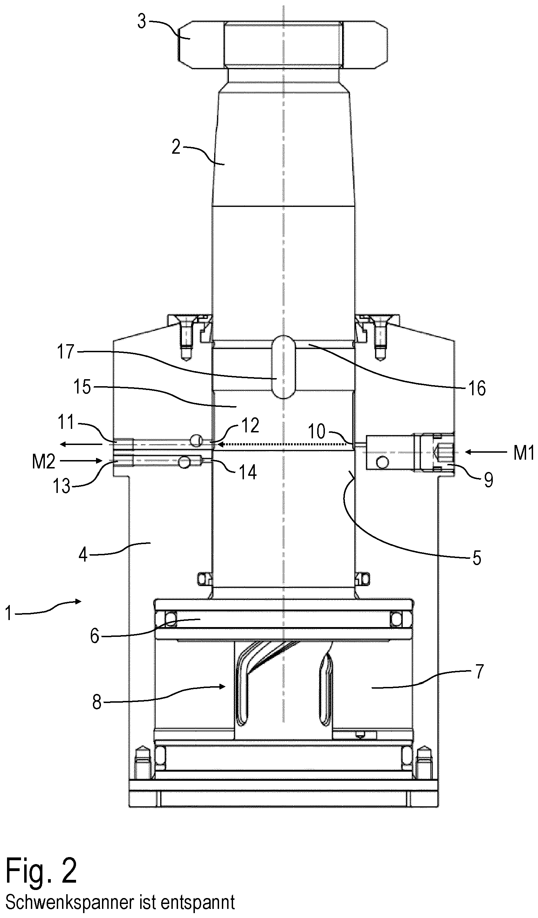

Im Folgenden wird nun die Stellung des Schwenkspanners 1 gemäß Figur 2 beschrieben. In dieser Stellung ist der Schwenkspanner 1 entspannt und nicht geschwenkt. In dieser Stellung befinden sich die Mündungsöffnung 10 des ersten Zuluftkanals 9 und die Mündungsöffnung 12 des Abluftkanals 11 im Bereich der Ringnut 15 in der Mantelfläche der Kolbenstange 2. Die Druckluft M1 kann somit aus dem ersten Zuluftkanal 9 durch die Ringnut 15 in den Abluftkanal 11 strömen.

Die Mündungsöffnung 14 des zweiten Zuluftkanals 13 wird dagegen von der Mantelfläche der Kolbenstange 2 versperrt.

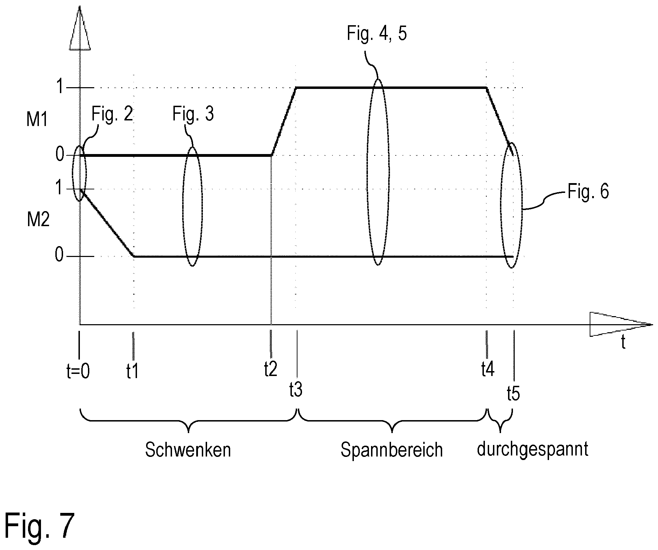

Dieser Zustand gemäß Figur 2 ist in dem Diagramm gemäß Figur 7 ganz links bei t=0 dargestellt.

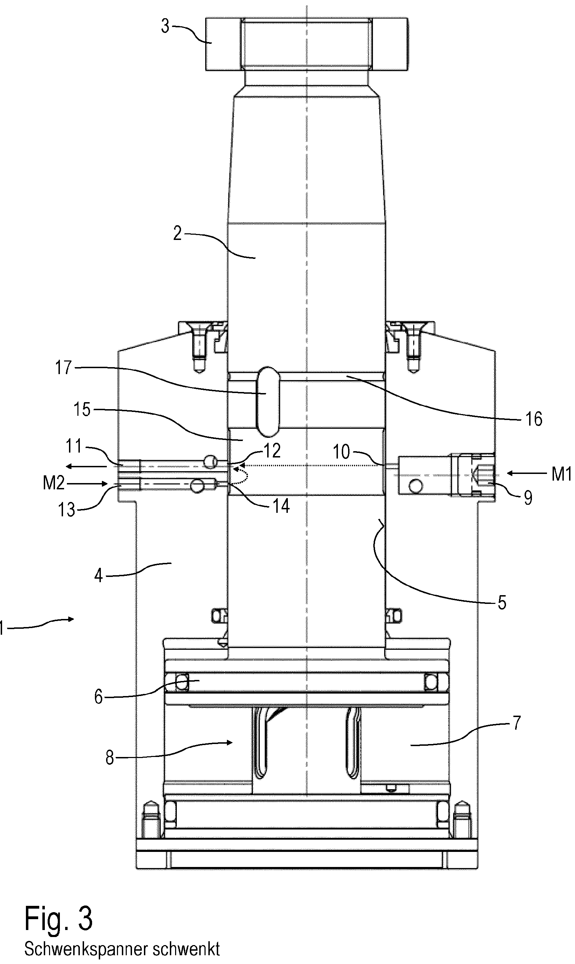

Im Folgenden wird nun die Stellung der Schwenkspanners 1 gemäß Figur 3 beschrieben. In dieser Stellung schwenkt der Schwenkspanner 1 zunächst vor dem eigentlichen Spannhub.

In dieser Stellung liegen alle Mündungsöffnung in 10, 12, 14 im Bereich der Ringnut 15, so dass sowohl die Strömungsverbindung aus dem ersten Zuluftkanal 9 in den Abluftkanal 11 als auch die Strömungsverbindung aus dem zweiten Zuluftkanal 13 in den Abluftkanal 11 freigegeben wird.

Dieser Zustand ist in dem Diagramm gemäß Figur 7 zwischen t=t1 und t=t2 dargestellt.

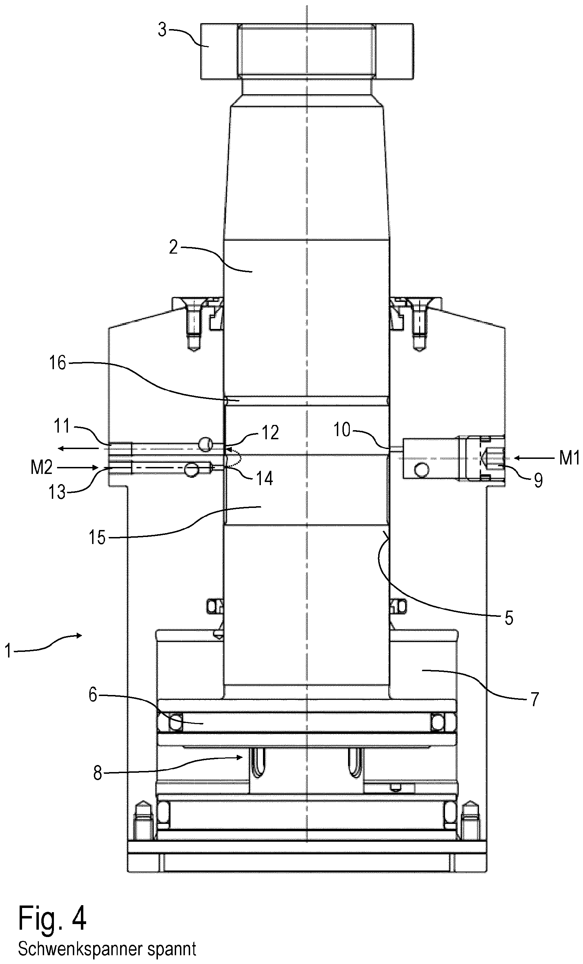

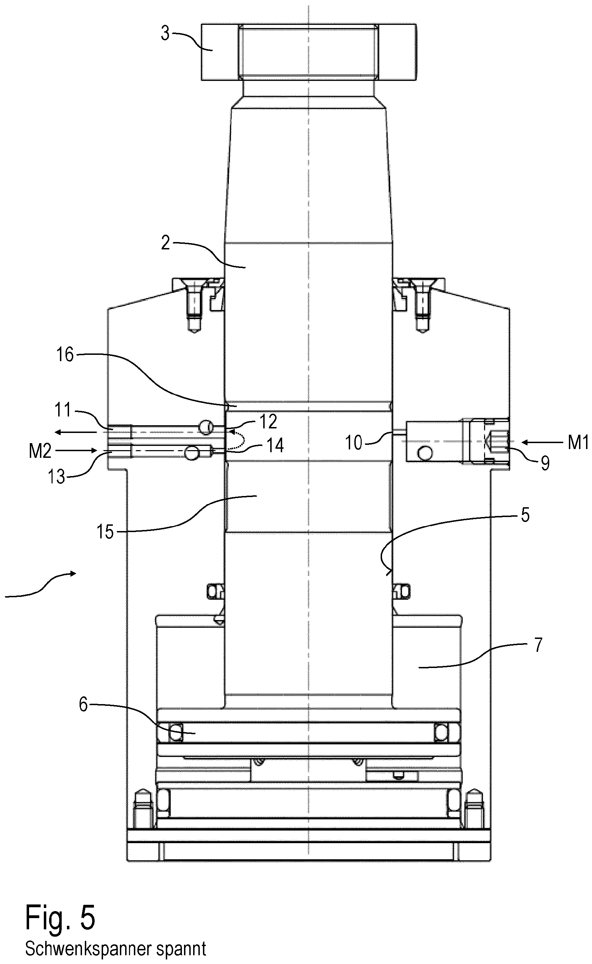

Im Folgenden wird nun die Stellung des Schwenkspanner 1 gemäß den Figuren 4 und 5 beschrieben. In dieser Stellung führt der Schwenkspanner 1 den eigentlichen Spannhub nach dem Schwenken der Kolbenstange 2 aus.

Die Kolbenstange 2 ist in dieser Stellung so gedreht, dass die Ausnehmung 17 in Deckung über den Mündungsöffnungen 12, 14 liegt, so dass die Strömungsverbindung aus dem zweiten Zuluftkanal 13 in den Abluftkanal 11 freigegeben wird.

In dieser Stellung des Schwenkspanners 1 während des Spannhubs befindet sich die Ringnut 15 dagegen unterhalb der Mündungsöffnung 10 des ersten Zuluftkanals 9. Dies bedeutet, dass die Mantelfläche der Kolbenstange 2 die Strömungsverbindung aus dem ersten Zuluftkanal 9 in den Abluftkanal 11 sperrt.

Diese Stellung während des Spannhubs ist in dem Diagramm gemäß Figur 7 zwischen t=t3 und t=t4 dargestellt.

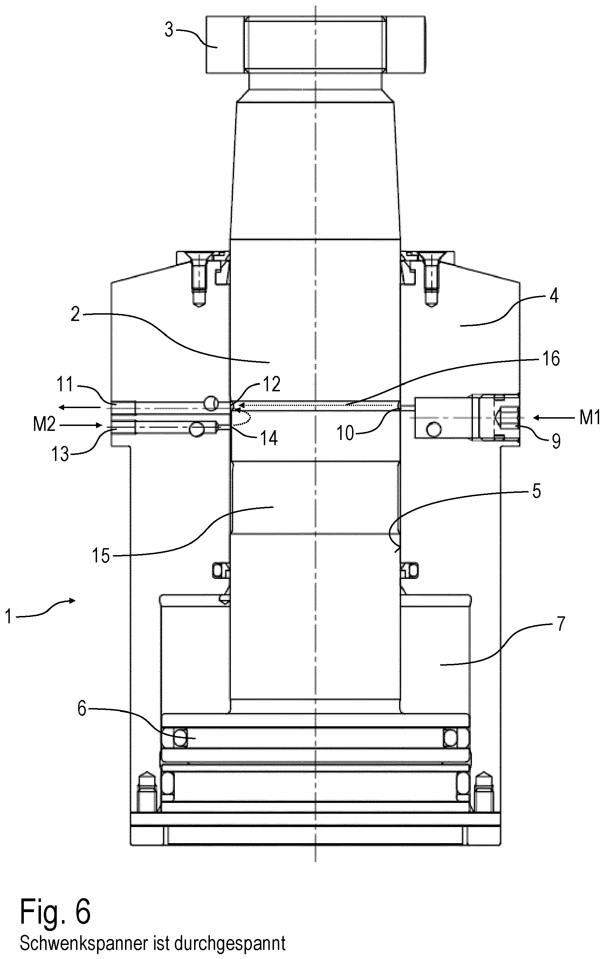

Im Folgenden wird nun die Stellung des Schwenkspanners 1 gemäß Figur 6 beschrieben. In dieser Stellung ist der Schwenkspanner 1 durchgespannt, d.h. der Antriebskolben 6 befindet sich in dem Arbeitszylinder 7 an seinem unteren Anschlag.

In dieser Stellung gibt die Ringnut 16 in der Mantelfläche der Kolbenstange 2 die Strömungsverbindung aus dem ersten Zuluftkanal 9 in den Abluftkanal 11 frei.

Darüber hinaus gibt die Ausnehmung 17 (Langloch) in der Mantelfläche der Kolbenstange 2 die Strömungsverbindung aus dem zweiten Zuluftkanal 13 in den Abluftkanal 11 frei.

Diese Stellung ist in dem Diagramm gemäß Figur 7 zum Zeitpunkt t=t5 dargestellt.

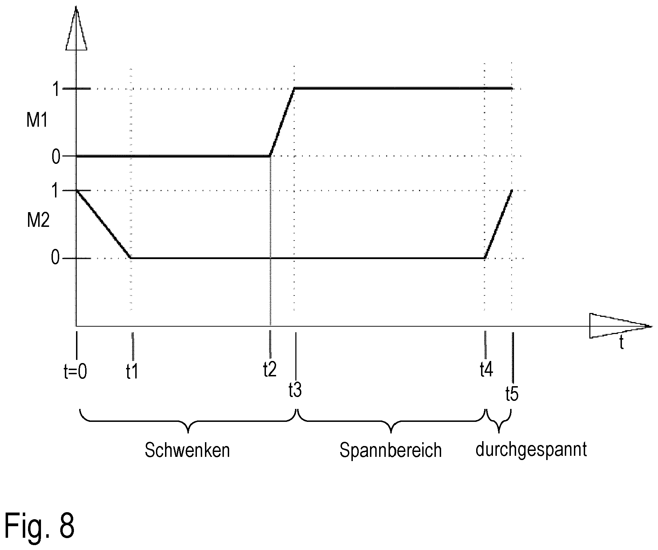

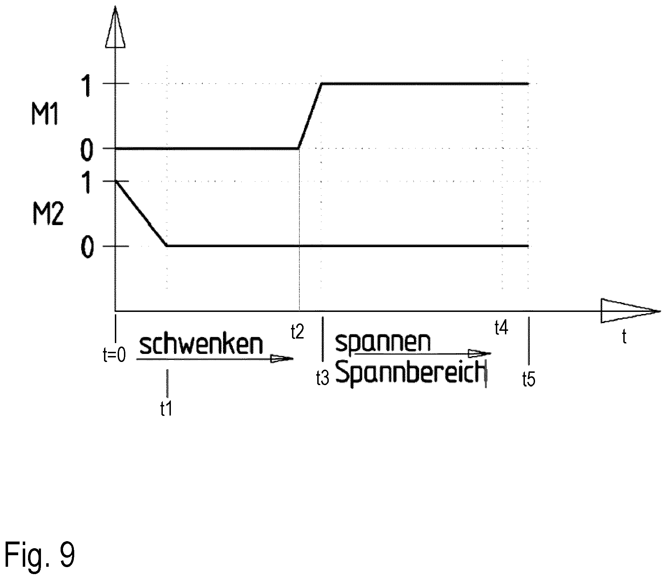

Die Figuren 8 und 9 zeigen Abwandlungen des Diagramms gemäß Figur 7, wobei sich die Abwandlungen lediglich im Bereich von t=t4 bis t=t5 von dem Diagramm gemäß Figur 7 unterscheiden.

Bei der Variante gemäß Figur 8 wird die Strömungsverbindung zwischen dem zweiten Zuluftkanal 13 und dem Abluftkanal 11 zwischen t=t4 und t=t5 wieder gesperrt. Dies lässt sich dadurch erreichen, dass die axial verlaufende Ausnehmung 17 (Langloch) in der Mantelfläche der Kolbenstange 2 entsprechend kurz ausgeführt wird.

Ein weiterer Unterschied besteht darin, dass die Strömungsverbindung zwischen dem ersten Zuluftkanal 9 und dem Abluftkanal 11 zwischen t=t4 und t=t5 gesperrt bleibt. Dies lässt sich dadurch erreichen, dass auf die zweite Ringnut 16 in der Mantelfläche der Kolbenstange 2 verzichtet wird.

Auch bei dieser Variante können die vier Stellungen der Kolbenstange 2 unterschieden werden.

Bei der Abwandlung gemäß Figur 9 bleibt die Strömungsverbindung zwischen dem zweiten Zuluftkanal 13 und dem Abluftkanal 11 dagegen zwischen t=t4 und t=t5 freigegeben, wie es auch bei dem Diagramm gemäß Figur 7 der Fall ist. Zwischen t=t4 und t=t5 bleibt die Strömungsverbindung zwischen dem ersten Zuluftkanal 9 und dem Abluftkanal 11 dagegen gesperrt. Diese Abwandlung ermöglicht deshalb nicht die Erkennung des durchgespannten Zustands.

### Bezugszeichenliste:

- 1: Schwenkspanner
- 2: Kolbenstange
- 3: Befestigungsmutter zur Befestigung eines Spanneisens
- 4: Gehäuse des Schwenkspanners
- 5: Kolbenstangenlauffläche des Führungszylinders
- 6: Antriebskolben
- 7: Arbeitszylinder
- 8: Kulissenführung
- 9: Erster Zuluftkanal der pneumatischen Stellungsabfrage
- 10: Mündungsöffnung des ersten Zuluftkanals in der Kolbenstangenlauffläche
- 11: Abluftkanal der pneumatischen Stellungsabfrage
- 12: Mündungsöffnung des Abluftkanals in der Kolbenstangenlauffläche
- 13: Zweiter Zuluftkanal der pneumatischen Stellungsabfrage
- 14: Mündungsöffnung des zweiten Zuluftkanals in der Kolbenstangenlauffläche
- 15: Erste Ringnut in der Mantelfläche der Kolbenstange
- 16: Zweite Ringnut in der Mantelfläche der Kolbenstange
- 17: Axial verlaufende Ausnehmung in der Mantelfläche der Kolbenstange
- M1: Druckluft am ersten Zuluftkanal
- M2: Druckluft am zweiten Zuluftkanal

## Patentansprüche

1. Spannvorrichtung (1), insbesondere zum Spannen eines Werkstücks oder eines Werkzeugs, insbesondere als Schwenkspanner (1) oder als Blockzylinder, mit
a) einem Führungszylinder mit einer Kolbenstangenlauffläche (5),
b) einer Kolbenstange (2), die in dem Führungszylinder beweglich geführt ist, insbesondere axial verschiebbar und/oder drehbar, und
c) einer pneumatischen Stellungsabfrage (9-17, M1, M2) zur Abfrage der Stellung der Kolbenstange (2), mit
c1) einem ersten Zuluftkanal (9) zur Zuführung von Druckluft,
c2) einem Abluftkanal (11) zur Abführung der Druckluft, und
c3) einem ersten Steuerelement (15), das in Abhängigkeit von der Stellung der Kolbenstange (2) eine Strömungsverbindung von dem ersten Zuluftkanal (9) in den Abluftkanal (11) freigibt oder versperrt,
**dadurch gekennzeichnet,**
d) **dass** der erste Zuluftkanal (9) in einer Mündungsöffnung (10) in der Kolbenstangenlauffläche (5) des Führungszylinders ausmündet,
e) **dass** der Abluftkanal (11) in einer Mündungsöffnung (12) in der Kolbenstangenlauffläche (5) des Führungszylinders ausmündet, und
f) **dass** das erste Steuerelement (15) in der Mantelfläche der Kolbenstange (2) angeordnet ist und in Abhängigkeit von der Stellung der Kolbenstange (2) die Strömungsverbindung zwischen der Mündungsöffnung (10) des ersten Zuluftkanals (9) und der Mündungsöffnung (12) des Abluftkanals (11) in der Kolbenstangenlauffläche (5) des Führungszylinders freigibt oder versperrt.

2. Spannvorrichtung (1) nach Anspruch 1, **dadurch gekennzeichnet,**
a) **dass** die Kolbenstange (2) in dem Führungszylinder axial beweglich geführt ist,
b) **dass** das erste Steuerelement (15) der pneumatischen Stellungsabfrage (9-17, M1, M2) eine erste Ringnut (15) oder eine erste Teilringnut am Umfang in der Mantelfläche der Kolbenstange (2) ist, und
c) **dass** die erste Ringnut (15) oder die erste Teilringnut am Umfang in Abhängigkeit von der axialen Stellung der Kolbenstange (2) die Strömungsverbindung zwischen der Mündungsöffnung (10) des ersten Zuluftkanals (9) und der Mündungsöffnung (12) des Abluftkanals (11) in der Kolbenstangenlauffläche (5) des Führungszylinders freigibt oder versperrt.

3. Spannvorrichtung (1) nach Anspruch 2, **dadurch gekennzeichnet,**
a) **dass** die pneumatische Stellungsabfrage (9-17, M1, M2) einen zweiten Zuluftkanal (13) zur Zuführung von Druckluft aufweist,
b) **dass** der zweite Zuluftkanal (13) in einer Mündungsöffnung (14) in der Kolbenstangenlauffläche (5) des Führungszylinders ausmündet,
c) **dass** in der Mantelfläche der Kolbenstange (2) ein zweites Steuerelement (17) angeordnet ist, das in Abhängigkeit von der Stellung der Kolbenstange (2) die Strömungsverbindung zwischen der Mündungsöffnung (13) des zweiten Zuluftkanals (13) und der Mündungsöffnung (12) des Abluftkanals (11) in der Kolbenstangenlauffläche (5) des Führungszylinders freigibt oder versperrt.

4. Spannvorrichtung (1) nach einem der vorhergehenden Ansprüche, **dadurch gekennzeichnet,**
a) **dass** die Kolbenstange (2) in dem Führungszylinder drehbar ist,
b) **dass** das zweite Steuerelement (17) eine Ausnehmung ist, welche sich in der Mantelfläche der Kolbenstange (2) in axialer Richtung erstreckt, und
c) **dass** die Ausnehmung (17) in Abhängigkeit von der Drehstellung der Kolbenstange (2) die Strömungsverbindung zwischen der Mündungsöffnung (14) des zweiten Zuluftkanals (13) und der Mündungsöffnung (12) des Abluftkanals (11) in der Kolbenstangenlauffläche (5) des Führungszylinders freigibt oder versperrt.

5. Spannvorrichtung (1) nach einem der Ansprüche 3 bis 4, **dadurch gekennzeichnet,**
a) **dass** sich in der Mantelfläche der Kolbenstange (2) ein drittes Steuerelement (16) befindet, das in Abhängigkeit von der axialen Stellung der Kolbenstange (2) die Strömungsverbindung zwischen der Mündungsöffnung (10) des ersten Zuluftkanals (9) und der Mündungsöffnung (12) des Abluftkanals (11) in der Kolbenstangenlauffläche (5) des Führungszylinders freigibt oder versperrt, und
b) **dass** das dritte Steuerelement (16) axial beabstandet zu dem ersten Steuerelement (15) in der Mantelfläche der Kolbenstange (2) angeordnet ist.

6. Spannvorrichtung (1) nach Anspruch 5, **dadurch gekennzeichnet, dass** das dritte Steuerelement (16) eine zweite Ringnut (16) oder eine zweite Teilringnut am Umfang in der Mantelfläche der Kolbenstange (2) ist, die in Abhängigkeit von der axialen Stellung der Kolbenstange (2) die Strömungsverbindung zwischen der Mündungsöffnung (10) des ersten Zuluftkanals (9) und der Mündungsöffnung (12) des Abluftkanals (11) in der Kolbenstangenlauffläche (5) des Führungszylinders freigibt oder versperrt.

7. Spannvorrichtung (1) nach einem der vorhergehenden Ansprüche, **dadurch gekennzeichnet,**
a) **dass** die Mündungsöffnung (10) des ersten Zuluftkanals (9) in der Kolbenstangenlauffläche (5) des Führungszylinders axial versetzt ist zu der Mündungsöffnung (14) des zweiten Zuluftkanals (13), und/oder
b) **dass** die Mündungsöffnung (10) des ersten Zuluftkanals (9) in der Kolbenstangenlauffläche (5) des Führungszylinders axial versetzt ist zu der Mündungsöffnung (12) des Abluftkanals (11), und/oder
c) **dass** die Mündungsöffnung des zweiten Zuluftkanals (14) in der Kolbenstangenlauffläche (5) des Führungszylinders axial versetzt ist zu der Mündungsöffnung (12) des Abluftkanals (11), und/oder
d) **dass** die Mündungsöffnung (10) des ersten Zuluftkanals (9) einerseits und die Mündungsöffnung (14) des zweiten Zuluftkanals (13) andererseits in Umfangsrichtung versetzt angeordnet sind, und/oder
e) **dass** die Mündungsöffnung (10) des ersten Zuluftkanals (9) einerseits und die Mündungsöffnung (12) des Abluftkanals (11) in Umfangsrichtung versetzt angeordnet sind, und/oder
f) **dass** sich die Ausnehmung (17) in der Mantelfläche der Kolbenstange (2) in axialer Richtung bis in die erste Ringnut (15) oder die erste Teilringnut am Umfang in der Mantelfläche der Kolbenstange (2) erstreckt, und/oder
g) **dass** sich die Ausnehmung (17) in der Mantelfläche der Kolbenstange (2) in axialer Richtung bis in die zweite Ringnut (16) oder in die zweite Teilringnut am Umfang in der Mantelfläche der Kolbenstange (2) erstreckt, und/oder
h) **dass** die Mündungsöffnung (14) des zweiten Zuluftkanals (13) und die Mündungsöffnung (12) des Abluftkanals (11) in der Kolbenstangenlauffläche (5) in der derselben Winkelstellung angeordnet sind.

8. Spannvorrichtung (1) nach einem der vorhergehenden Ansprüche, **gekennzeichnet durch**
a) einen Arbeitszylinder (7),
b) einen Antriebskolben (6), der in dem Arbeitszylinder (7) axial verschiebbar angeordnet ist, wobei der Antriebskolben (6) mechanisch mit der Kolbenstange (2) verbunden ist und die Kolbenstange (2) mechanisch in axialer Richtung antreibt, und
c) einem Druckmittelantrieb zur pneumatischen oder hydraulischen Druckmittelbeaufschlagung des Antriebskolbens (6) in dem Arbeitszylinder (7).

9. Spannvorrichtung (1) nach einem der vorhergehenden Ansprüche, **dadurch gekennzeichnet,**
a) **dass** die Spannvorrichtung (1) ein Schwenkspanner (1) ist, und/oder
b) **dass** die Kolbenstange (2) an ihrem oberen Ende ein Spanneisen oder eine Montagemöglichkeit (3) für ein Spanneisen (3) trägt, und/oder
c) **dass** sich der Führungszylinder für die Kolbenstange (2) mit der pneumatischen Stellungsabfrage (9-17, M1, M2) in axialer Richtung
c1) zwischen dem oberen Ende der Kolbenstange (2) und dem Arbeitszylinder befindet, oder
c2) unterhalb des Arbeitszylinders befindet, und/oder
d) **dass** der Schwenkspanner (1) eine Kulissenführung (8) aufweist, die eine axiale Antriebsbewegung des Antriebskolbens (6) in eine kombinierte oder aufeinander folgende Axial- und Drehbewegung der Kolbenstange (2) umwandelt.

10. Spannvorrichtung (1) nach Anspruch 9, **dadurch gekennzeichnet, dass** die pneumatische Stellungsabfrage (9-17, M1, M2) mindestens zwei der folgenden Stellungen des Schwenkspanners (1) unterscheidet:
a) eine erste Stellung (Fig. 2), in der der Schwenkspanner (1) nicht geschwenkt und entspannt ist,
b) eine zweite Stellung (Fig. 3), in der der Schwenkspanner (1) vor einem Spannhub einen Schwenkhub ausführt,
c) eine dritte Stellung (Fig. 4, 5), in der der Schwenkspanner (1) nach dem Schwenkhub einen Spannhub ausführt, und
d) eine vierte Stellung (Fig. 6), in der der Schwenkspanner (1) nach dem Spannhub durchgespannt ist.

11. Spannvorrichtung (1) nach Anspruch 10, **dadurch gekennzeichnet,**
a) **dass** die pneumatische Stellungsabfrage (9-17, M1, M2) in der ersten Stellung (Fig. 2)
a1) die Strömungsverbindung aus dem ersten Zuluftkanal (9) in den Abluftkanal (11) freigibt und
a2) die Strömungsverbindung aus dem zweiten Zuluftkanal in den Abluftkanal (11) sperrt, und/oder
b) **dass** die pneumatische Stellungsabfrage (9-17, M1, M2) in der zweiten Stellung (Fig. 3)
b1) die Strömungsverbindung aus dem ersten Zuluftkanal (9) in den Abluftkanal (11) freigibt und
b2) die Strömungsverbindung aus dem zweiten Zuluftkanal in den Abluftkanal (11) freigibt, und/oder
c) **dass** die pneumatische Stellungsabfrage (9-17, M1, M2) in der dritten Stellung (Fig. 4, 5)
c1) die Strömungsverbindung aus dem ersten Zuluftkanal (9) in den Abluftkanal (11) sperrt und
c2) die Strömungsverbindung aus dem zweiten Zuluftkanal in den Abluftkanal (11) freigibt, und/oder
d) **dass** die pneumatische Stellungsabfrage (9-17, M1, M2) in der vierten Stellung (Fig. 6)
d1) die Strömungsverbindung aus dem ersten Zuluftkanal (9) in den Abluftkanal (11) freigibt und
d2) die Strömungsverbindung aus dem zweiten Zuluftkanal in den Abluftkanal (11) freigibt, oder
e) **dass** die pneumatische Stellungsabfrage (9-17, M1, M2) in der vierten Stellung
e1) die Strömungsverbindung aus dem ersten Zuluftkanal (9) in den Abluftkanal (11) sperrt und
e2) die Strömungsverbindung aus dem zweiten Zuluftkanal in den Abluftkanal (11) sperrt.

12. Spannvorrichtung (1) nach Anspruch 10 oder 11, **dadurch gekennzeichnet,**
a) **dass** sich der Antriebskolben (6) in der ersten Stellung (Fig. 2) des Schwenkspanners (1) in dem Arbeitszylinder (7) an seinem oberen Anschlag befindet, und/oder
b) **dass** sich der Antriebskolben (6) in der zweiten Stellung (Fig. 3) des Schwenkspanners (1) und in der dritten Stellung (Fig. 4, 5) des Schwenkspanners (1) in dem Arbeitszylinder (7) zwischen seinem oberen Anschlag und seinem unteren Anschlag befindet, und/oder
c) **dass** sich der Antriebskolben (6) in der vierten Stellung (Fig. 6) des Schwenkspanners (1) in dem Arbeitszylinder (7) an seinem unteren Anschlag befindet.

13. Spannvorrichtung (1) nach einem der vorhergehenden Ansprüche, **dadurch gekennzeichnet,**
a) **dass** die pneumatische Stellungsabfrage (9-17, M1, M2) sowohl die axiale Stellung der Kolbenstange (2) erfasst als auch die Drehstellung der Kolbenstange (2), und/oder
b) **dass** der erste Zuluftkanal (9), der zweite Zuluftkanal (13) und/oder der Abluftkanal (11) jeweils radial von außen in der Kolbenstangenlauffläche (5) des Führungszylinders ausmünden, und/oder
c) **dass** die pneumatische Stellungsabfrage (9-17, M1, M2) zusätzlich zu den beweglichen Steuerelementen, insbesondere zusätzlich zu der Kolbenstange (2), keine beweglichen Teile in dem Schwenkspanner (1) aufweist.

14. Spannvorrichtung nach einem der vorhergehenden Ansprüche, **dadurch gekennzeichnet,**
a) **dass** die Kolbenstange aus einem Grundkörper und einer Hülse besteht, die den Grundkörper umgibt und fest mit dem Grundkörper verbunden ist,
b) **dass** optional das erste Steuerelement (15) und/oder das zweite Steuerelement (17) und/oder das dritte Steuerelement (16) in der Mantelfläche der Hülse angeordnet ist,
c) **dass** optional der Grundkörper und die Hülse durch Einpressen, Kleben oder Aufschrumpfen miteinander verbunden sind.

## Claims

1. Clamping device (1), in particular for clamping a workpiece or a tool, in particular as a swivel clamp (1) or as a block cylinder, having
a) a guide cylinder with a piston rod running surface (5),
b) a piston rod (2) which is movably guided in the guide cylinder, in particular axially displaceable and/or rotatable, and
c) a pneumatic position sensing device (9-17, M1, M2) for sensing the position of the piston rod (2), with
c1) a first air supply channel (9) for supplying compressed air,
c2) an exhaust air channel (11) for discharging the compressed air, and
c3) a first control element (15) which, depending on the position of the piston rod (2), releases or blocks a flow connection from the first air supply channel (9) into the exhaust air channel (11),
**characterized in**
d) **that** the first air supply channel (9) opens out in an orifice (10) in the piston rod running surface (5) of the guide cylinder,
e) **that** the exhaust air channel (11) opens out in an orifice (12) in the piston rod running surface (5) of the guide cylinder, and
f) **that** the first control element (15) is arranged in the circumferential surface of the piston rod (2) and, depending on the position of the piston rod (2), releases or blocks the flow connection between the orifice (10) of the first air supply channel (9) and the orifice (12) of the exhaust air channel (11) in the piston rod running surface (5) of the guide cylinder.

2. Clamping device (1) according to claim 1, **characterized in**
a) **that** the piston rod (2) is axially movably guided in the guide cylinder,
b) **that** the first control element (15) of the pneumatic position sensing device (9-17, M1, M2) is a first annular groove (15) or a first partial annular groove on the circumference in the circumferential surface of the piston rod (2), and
c) **that** the first annular groove (15) or the first partial annular groove on the circumference, depending on the axial position of the piston rod (2), releases or blocks the flow connection between the orifice (10) of the first air supply channel (9) and the orifice (12) of the exhaust air channel (11) in the piston rod running surface (5) of the guide cylinder.

3. Clamping device (1) according to claim 2, **characterized in**
a) **that** the pneumatic position sensing device (9-17, M1, M2) comprises a second air supply channel (13) for supplying compressed air,
b) **that** the second air supply channel (13) opens out in an orifice (14) in the piston rod running surface (5) of the guide cylinder,
c) **that** a second control element (17) is arranged in the outer surface of the piston rod (2) which, depending on the position of the piston rod (2), releases or blocks the flow connection between the orifice (13) of the second air supply channel (13) and the orifice (12) of the exhaust air channel (11) in the piston rod running surface (5) of the guide cylinder.

4. Clamping device (1) according to one of the preceding claims, **characterized in**
a) **that** the piston rod (2) is rotatable in the guide cylinder,
b) **that** the second control element (17) is a recess which extends in the circumferential surface of the piston rod (2) in the axial direction, and
c) **that** the recess (17), depending on the rotational position of the piston rod (2), opens or blocks the flow connection between the orifice (14) of the second air supply channel (13) and the orifice (12) of the exhaust air channel (11) in the piston rod running surface (5) of the guide cylinder.

5. Clamping device (1) according to one of claims 3 to 4, **characterized in**
a) **that** a third control element (16) is located in the circumferential surface of the piston rod (2), which, depending on the axial position of the piston rod (2), releases or blocks the flow connection between the orifice (10) of the first air supply channel (9) and the orifice (12) of the exhaust air channel (11) in the piston rod running surface (5) of the guide cylinder, and
b) **that** the third control element (16) is arranged axially spaced from the first control element (15) in the circumferential surface of the piston rod (2).

6. Clamping device (1) according to claim 5, **characterized in that** the third control element (16) is a second annular groove (16) or a second partial annular groove on the circumference in the circumferential surface of the piston rod (2) which, depending on the axial position of the piston rod (2), releases or blocks the flow connection between the orifice (10) of the first air supply channel (9) and the orifice (12) of the exhaust air channel (11) in the piston rod running surface (5) of the guide cylinder.

7. Clamping device (1) according to one of the preceding claims, **characterized in**
a) **that** the orifice (10) of the first air supply channel (9) in the piston rod running surface (5) of the guide cylinder is axially offset relative to the orifice (14) of the second air supply channel (13), and/or
b) **that** the orifice (10) of the first air supply channel (9) in the piston rod running surface (5) of the guide cylinder is axially offset relative to the orifice (12) of the exhaust air channel (11), and/or
c) **that** the orifice of the second air supply channel (14) in the piston rod running surface (5) of the guide cylinder is axially offset relative to the orifice (12) of the exhaust air channel (11), and/or
d) **that** the orifice (10) of the first air supply channel (9) on the one hand and the orifice (14) of the second air supply channel (13) on the other hand are arranged offset in the circumferential direction, and/or
e) **that** the orifice (10) of the first air supply channel (9) on the one hand and the orifice (12) of the exhaust air channel (11) on the other hand are arranged offset in the circumferential direction, and/or
f) **that** the recess (17) in the circumferential surface of the piston rod (2) extends in the axial direction into the first annular groove (15) or the first partial annular groove on the circumference in the circumferential surface of the piston rod (2), and/or
g) **that** the recess (17) in the circumferential surface of the piston rod (2) extends in the axial direction into the second annular groove (16) or into the second partial annular groove on the circumference in the circumferential surface of the piston rod (2), and/or
h) **that** the orifice (14) of the second air supply channel (13) and the orifice (12) of the exhaust air channel (11) are arranged in the same angular position in the piston rod running surface (5).

8. Clamping device (1) according to one of the preceding claims, **characterized by**
a) a working cylinder (7),
b) a drive piston (6) which is arranged axially displaceably in the working cylinder (7), the drive piston (6) being mechanically connected to the piston rod (2) and mechanically driving the piston rod (2) in the axial direction, and
c) a pressure medium drive for pneumatic or hydraulic pressure medium application to the drive piston (6) in the working cylinder (7).

9. Clamping device (1) according to one of the preceding claims, **characterized in**
a) **that** the clamping device (1) is a swing clamp (1), and/or
b) **that** the piston rod (2) carries a clamping arm or a mounting option (3) for a clamping arm (3) at its upper end, and/or
c) **that** the guide cylinder for the piston rod (2) with the pneumatic position sensing device (9-17, M1, M2) is located in axial direction
c1) between the upper end of the piston rod (2) and the working cylinder, or
c2) below the working cylinder, and/or
d) **that** the swing clamp (1) has a slotted guide (8) which converts an axial drive movement of the drive piston (6) into a combined or successive axial and rotary movement of the piston rod (2).

10. Clamping device (1) according to claim 9, **characterized in that** the pneumatic position sensing device (9-17, M1, M2) distinguishes at least two of the following positions of the swing clamp (1):
a) a first position (Fig. 2), in which the swing clamp (1) is not swiveled and is released,
b) a second position (Fig. 3), in which the swing clamp (1) performs a swing stroke before a clamping stroke,
c) a third position (Figs. 4, 5), in which the swing clamp (1) performs a clamping stroke after the swing stroke, and
d) a fourth position (Fig. 6), in which the swing clamp (1) is fully clamped after the clamping stroke.

11. Clamping device (1) according to claim 10, **characterized in**
a) **that** the pneumatic position sensing device (9-17, M1, M2) in the first position (Fig. 2)
a1) releases the flow connection from the first air supply channel (9) into the exhaust air channel (11) and
a2) blocks the flow connection from the second air supply channel into the exhaust air channel (11),
and/or
b) **that** the pneumatic position sensing device (9-17, M1, M2) in the second position (Fig. 3)
b1) releases the flow connection from the first air supply channel (9) into the exhaust air channel (11) and
b2) releases the flow connection from the second air supply channel into the exhaust air channel (11),
and/or
c) **that** the pneumatic position sensing device (9-17, M1, M2) in the third position (Fig. 4, 5)
c1) blocks the flow connection from the first air supply channel (9) into the exhaust air channel (11) and
c2) releases the flow connection from the second air supply channel into the exhaust air channel (11),
and/or
d) **that** the pneumatic position sensing device (9-17, M1, M2) in the fourth position (Fig. 6)
d1) releases the flow connection from the first air supply channel (9) into the exhaust air channel (11) and
d2) releases the flow connection from the second air supply channel into the exhaust air channel (11), or
e) **that** the pneumatic position sensing device (9-17, M1, M2) in the fourth position
e1) blocks the flow connection from the first air supply channel (9) into the exhaust air channel (11) and
e2) blocks the flow connection from the second air supply channel into the exhaust air channel (11).

12. Clamping device (1) according to claim 10 or 11, **characterized in**
a) **that** in the first position (Fig. 2) of the swing clamp (1), the drive piston (6) is located in the working cylinder (7) at its upper stop, and/or
b) **that** in the second position (Fig. 3) of the swing clamp (1) and in the third position (Figs. 4, 5) of the swing clamp (1), the drive piston (6) is located in the working cylinder (7) between its upper stop and its lower stop, and/or
c) **that** in the fourth position (Fig. 6) of the swing clamp (1), the drive piston (6) is located in the working cylinder (7) at its lower stop.

13. Clamping device (1) according to one of the preceding claims, **characterized in**
a) **that** the pneumatic position sensing device (9-17, M1, M2) detects both the axial position of the piston rod (2) and the rotational position of the piston rod (2), and/or
b) **that** the first air supply channel (9), the second air supply channel (13) and/or the exhaust air channel (11) each open radially from the outside into the piston rod running surface (5) of the guide cylinder, and/or
c) **that** the pneumatic position sensing device (9-17, M1, M2) has no moving parts in the swing clamp (1) in addition to the moving control elements, in particular in addition to the piston rod (2).

14. Clamping device according to one of the preceding claims, **characterized in**
a) **that** the piston rod consists of a base body and a sleeve which surrounds the base body and is firmly connected to the base body,
b) **that** optionally the first control element (15) and/or the second control element (17) and/or the third control element (16) is arranged in the circumferential surface of the sleeve,
c) optionally, the base body and the sleeve are connected to one another by press-fitting, gluing or shrink-fitting.

## Revendications

1. Dispositif de serrage (1), destiné en particulier à serrer une pièce ou un outil, en particulier en tant que dispositif de serrage pivotant (1) ou en tant que cylindre de bloc, avec
a) un cylindre de guidage avec une surface de roulement de tige de piston (5),
b) une tige de piston (2), qui est guidée de manière mobile dans le cylindre de guidage, en particulier de manière à pouvoir coulisser et/ou tourner axialement, et
c) un système d'interrogation de position pneumatique (9-17, M1, M2) destiné à interroger la position de la tige de piston (2), avec
c1) un premier canal d'amenée (9) destiné à amener de l'air comprimé,
c2) un canal d'air sortant (11) destiné à évacuer l'air comprimé, et
c3) un premier élément de commande (15), qui ouvre ou bloque une connexion fluidique depuis le premier canal d'amenée (9) dans le canal d'air sortant (11) en fonction de la position de la tige de piston (2),
**caractérisé en ce**
d) **que** le premier canal d'air entrant (9) débouche dans une ouverture d'embouchure (10) dans la surface de roulement de tige de piston (5) du cylindre de guidage,
e) **que** le canal d'air sortant (11) débouche dans une ouverture d'embouchure (12) dans la surface de roulement de tige de piston (5) du cylindre de guidage, et
f) **que** le premier élément de commande (15) est disposé dans la surface extérieure de la tige de piston (2) et ouvre ou bloque la connexion fluidique entre l'ouverture d'embouchure (10) du premier canal d'air entrant (9) et l'orifice d'embouchure (12) du canal d'air sortant (11) dans la surface de roulement de tige de piston (5) du cylindre de guidage en fonction de la position de la tige de piston (2).

2. Dispositif de serrage (1) selon la revendication 1, **caractérisé en ce**
a) **que** la tige de piston (2) est guidée de manière mobile axialement dans le cylindre de guidage,
b) **que** le premier élément de commande (15) du système d'interrogation de position pneumatique (9-17, M1, M2) est une première rainure annulaire (15) ou une première rainure annulaire partielle sur la périphérie dans la surface extérieure de la tige de piston (2), et
c) **que** la première rainure annulaire (15) ou la première rainure annulaire partielle ouvre ou bloque la connexion fluidique entre l'ouverture d'embouchure (10) du premier canal d'air entrant (9) et l'ouverture d'embouchure (12) du canal d'air sortant (11) dans la surface de roulement de tige de piston (5) du cylindre de guidage sur la périphérie en fonction de la position axiale de la tige de piston (2).

3. Dispositif de serrage (1) selon la revendication 2, **caractérisé en ce**
a) **que** le système d'interrogation de position pneumatique (9-17, M1, M2) présente un deuxième canal d'air entrant (13) destiné à amener de l'air comprimé,
b) **que** le deuxième canal d'air entrant (13) débouche dans une ouverture d'embouchure (14) dans la surface de roulement de tige de piston (5) du cylindre de guidage,
c) **qu'**est disposé, dans la surface extérieure de la tige de piston (2), un deuxième élément de commande (17), qui ouvre ou bloque la connexion fluidique entre l'ouverture d'embouchure (13) du deuxième canal d'air entrant (13) et l'ouverture d'embouchure (12) du canal d'air sortant (11) dans la surface de roulement de tige de piston (5) du cylindre de guidage en fonction de la position de la tige de piston (2).

4. Dispositif de serrage (1) selon l'une quelconque des revendications précédentes, **caractérisé en ce**
a) **que** la tige de piston (2) peut être tournée dans le cylindre de guidage,
b) **que** le deuxième élément de commande (17) est un évidement, lequel s'étend dans la surface extérieure de la tige de piston (2) dans la direction axiale, et
c) **que** l'évidement (17) ouvre ou bloque la connexion fluidique entre l'ouverture d'embouchure (14) du deuxième canal d'air entrant (13) et l'ouverture d'embouchure (12) du canal d'air sortant (11) dans la surface de roulement de tige de piston (5) du cylindre de guidage en fonction de la position de rotation de la tige de piston (2).

5. Dispositif de serrage (1) selon l'une quelconque des revendications 3 à 4, **caractérisé en ce**
a) **que** se trouve dans la surface extérieure de la tige de piston (2) un troisième élément de commande (16), qui ouvre ou bloque la connexion fluidique entre l'ouverture d'embouchure (10) du premier canal d'air entrant (9) et l'ouverture d'embouchure (12) du canal d'air sortant (11) dans la surface de roulement de tige de piston (5) du cylindre de guidage en fonction de la position axiale de la tige de piston (2), et
b) **que** le troisième élément de commande (16) est disposé à distance axialement par rapport au premier élément de commande (15) dans la surface périphérique de la tige de piston (2).

6. Dispositif de serrage (1) selon la revendication 5, **caractérisé en ce que** le troisième élément de commande (16) est une deuxième rainure annulaire (16) ou une deuxième rainure annulaire partielle sur la périphérie dans la surface extérieure de la tige de piston (2), qui ouvre ou bloque la connexion fluidique entre l'ouverture d'embouchure (10) du premier canal d'air entrant (9) et l'ouverture d'embouchure (12) du canal d'air sortant (11) dans la surface de roulement de tige de piston (5) du cylindre de guidage en fonction de la position axiale de la tige de piston (2).

7. Dispositif de serrage (1) selon l'une quelconque des revendications précédentes, **caractérisé en ce**
a) **que** l'ouverture d'embouchure (10) du premier canal d'air entrant (9) est décalée axialement dans la surface de roulement de tige de piston (5) du cylindre de guidage par rapport à l'ouverture d'embouchure (14) du deuxième canal d'air entrant (13), et/ou
b) **que** l'ouverture d'embouchure (10) du premier canal d'air entrant (9) est décalée axialement dans la surface de roulement de tige de piston (5) du cylindre de guidage par rapport à l'ouverture d'embouchure (12) du canal d'air sortant (11), et/ou
c) **que** l'ouverture d'embouchure du deuxième canal d'air entrant (14) est décalée axialement dans la surface de roulement de tige de piston (5) du cylindre de guidage par rapport à l'ouverture d'embouchure (12) du canal d'air sortant (11), et/ou
d) **que** l'ouverture d'embouchure (10) du premier canal d'air entrant (9) d'une part et l'ouverture d'embouchure (14) du deuxième canal d'air entrant (13) d'autre part sont disposées de manière décalée dans la direction périphérique, et/ou
e) **que** l'ouverture d'embouchure (10) du premier canal d'air entrant (9) d'une part et l'ouverture d'embouchure (12) du canal d'air sortant (11) sont disposées de manière décalée dans la direction périphérique, et/ou
f) **que** l'évidement (17) s'étend dans la surface extérieure de la tige de piston (2) dans la direction axiale jusqu'à la première rainure annulaire (15) ou la première rainure annulaire partielle sur la périphérie dans la surface extérieure de la tige de piston (2), et/ou
g) **que** l'évidement (17) s'étend dans la surface extérieure de la tige de piston (2) dans la direction axiale jusqu'à la deuxième rainure annulaire (16) ou dans la deuxième rainure annulaire partielle sur la périphérie dans la surface extérieure de la tige de piston (2), et/ou
h) **que** l'ouverture d'embouchure (14) du deuxième canal d'air entrant (13) et l'ouverture d'embouchure (12) du canal d'air sortant (11) sont disposées dans la même position angulaire dans la surface de roulement de tige de piston (5).

8. Dispositif de serrage (1) selon l'une quelconque des revendications précédentes, **caractérisé par**
a) un cylindre de travail (7),
b) un piston d'entraînement (6), qui est disposé de manière à pouvoir être coulissé axialement dans le cylindre de travail (7),
dans lequel le piston d'entraînement (6) est relié mécaniquement à la tige de piston (2) et entraîne mécaniquement la tige de piston (2) dans la direction axiale, et
c) un entraînement par fluide sous pression destiné à soumettre le piston d'entraînement (6) dans le cylindre de travail (7) à l'action pneumatique ou hydraulique d'un fluide sous pression.

9. Dispositif de serrage (1) selon l'une quelconque des revendications précédentes, **caractérisé en ce**
a) **que** le dispositif de serrage (1) est un dispositif de serrage pivotant (1), et/ou
b) **que** la tige de piston (2) supporte sur son extrémité supérieure un fer de serrage ou une possibilité de montage (3) pour un fer de serrage (3), et/ou
c) **que** le cylindre de guidage pour la tige de piston (2) se trouve avec le système d'interrogation de position (9-17, M1, M2) dans une direction axiale
c1) entre l'extrémité supérieure de la tige de piston (2) et le cylindre de travail,
ou
c2) sous le cylindre de travail, et/ou
d) **que** le dispositif de serrage pivotant (1) présente une glissière à coulisse (8), qui transforme un déplacement d'entraînement axial du piston d'entraînement (6) en un déplacement axial et rotatif combiné ou se suivant l'un l'autre de la tige de piston (2) .

10. Dispositif de serrage (1) selon la revendication 9, **caractérisé en ce que** le système d'interrogation de position pneumatique (9-17, M1, M2) distingue au moins deux des positions suivantes du dispositif de serrage pivotant (1) :
a) une première position (fig. 2), dans lequel le dispositif de serrage pivotant (1) n'est pas pivoté et desserré,
b) une deuxième position (fig. 3), dans laquelle le dispositif de serrage pivotant (1) exécute avant une course de serrage une course de pivotement,
c) une troisième position (fig. 4, 5), dans laquelle le dispositif de serrage pivotant (1) exécute après la course de pivotement une course de serrage, et
d) une quatrième position (fig. 6), dans laquelle le dispositif de serrage pivotant (1) est totalement serré après la course de serrage.

11. Dispositif de serrage (1) selon la revendication 10, **caractérisé en ce**
a) **que** le système d'interrogation de position pneumatique (9-17, M1, M2) dans la première position (fig. 2)
a1) ouvre la connexion fluidique depuis le premier canal d'air entrant (9) dans le canal d'air sortant (11), et
a2) bloque la connexion fluidique depuis le deuxième canal d'air entrant dans le canal d'air sortant (11) et/ou
b) **que** le système d'interrogation de position pneumatique (9-17, M1, M2) dans la deuxième position (fig. 3)
b1) ouvre la connexion fluidique depuis le premier canal d'air entrant (9) dans le canal d'air sortant (11), et
b2) ouvre la connexion fluidique depuis le deuxième canal d'air entrant dans le canal d'air sortant (11), et/ou
c) **que** le système d'interrogation de position pneumatique (9-17, M1, M2) dans la troisième position (fig. 4, 5)
c1) bloque la connexion fluidique depuis le premier canal d'air entrant (9) dans le canal d'air sortant (11) et
c2) ouvre la connexion fluidique depuis le deuxième canal d'air entrant dans le canal d'air sortant (11) et/ou
d) **que** le système d'interrogation de position pneumatique (9-17, M1, M2) dans la quatrième position (fig. 6)
d1) ouvre la connexion fluidique depuis le premier canal d'air entrant (9) dans le canal d'air sortant (11), et
d2) ouvre la connexion fluidique depuis le deuxième canal d'air entrant dans le canal d'air sortant (11), ou
e) **que** le système d'interrogation de position pneumatique (9-17, M1, M2) dans la quatrième position
e1) bloque la connexion fluidique depuis le premier canal d'air entrant (9) dans le canal d'air sortant (11), et
e2) bloque la connexion fluidique depuis le deuxième canal d'air entrant dans le canal d'air sortant (11) .

12. Dispositif de serrage (1) selon la revendication 10 ou 11, **caractérisé en ce**
a) **que** le piston d'entraînement (6) se trouve dans la première position (fig. 2) du système de serrage pivotant (1) dans le cylindre de travail (7) sur sa butée supérieure, et/ou
b) **que** le piston d'entraînement (6) se trouve dans la deuxième position (fig. 3) du système de serrage pivotant (1) et dans la troisième position (fig. 4, 5) du système de serrage pivotant (1) dans le cylindre de travail (7) entre sa butée supérieure et sa butée inférieure, et/ou
c) **que** le piston d'entraînement (6) se trouve dans la quatrième position (fig. 6) du système de serrage pivotant (1) dans le cylindre de travail (7) sur sa butée inférieure.

13. Dispositif de serrage (1) selon l'une quelconque des revendications précédentes, **caractérisé en ce**
a) **que** le système d'interrogation de position pneumatique (9-17, M1, M2) détecte à la fois la position axiale de la tige de piston (2) et la position de rotation de la tige de piston (2), et/ou
b) **que** le premier canal d'air entrant (9), le deuxième canal d'air entrant (13) et/ou le canal d'air sortant (11) débouchent respectivement radialement depuis l'extérieur dans la surface de roulement de tige de piston (5) du cylindre de guidage, et/ou
c) **que** le système d'interrogation de position pneumatique (9-17, M1, M2) ne présente aucune partie mobile dans le système de serrage pivotant (1) en plus des éléments de commande mobiles, en particulier en plus de la tige de piston (2).

14. Dispositif de serrage selon l'une quelconque des revendications précédentes, **caractérisé en ce**
a) **que** la tige de piston est constituée d'un corps de base et d'une douille, qui entoure le corps de base et est reliée de manière solidaire au corps de base,
b) **qu'**en option le premier élément de commande (15) et/ou le deuxième élément de commande (17) et/ou le troisième élément de commande (16) sont disposés dans la surface extérieure de la douille,
c) **qu'**en option le corps de base et la douille sont reliés par enfoncement, collage ou frettage l'un avec l'autre.
